# EUROPEAN PATENT APPLICATION

(11) **EP 4 455 983 A1**
(43) Date of publication of application: **30.10.2024**
(21) Application number: 23887146.1
(22) Date of filing: 25.10.2023

(54) **METHOD AND APPARATUS FOR MEASURING RESIDUAL AMOUNT OF CONTENT IN CONTAINER, ELECTRONIC DEVICE, AND STORAGE MEDIUM**

(30) Priority: 16.03.2023 CN 202310259442
(71) Applicant: PETKIT NETWORK TECHNOLOGY (SHANGHAI) CO., LTD., Shanghai 201100 (CN)
(72) Inventor: SHEN, Zhiyuan, Shanghai 201100 (CN); GUO, Weixue, Shanghai 201100 (CN); GONG, Jiawei, Shanghai 201100 (CN)
(74) Representative: Cabinet Beaumont
(86) International application number: PCT/CN2023/126602
(87) International publication number: WO 2024/187757

(57) **Abstract**

Provided are a method and an apparatus for detecting a remaining quantity of an object accommodated in a container, an electronic device, and a medium. The method for detecting remaining quantity of an object accommodated in a container including: acquiring the to-be-detected container image of a to-be-detected container; calculating the line information in the to-be-detected container image to generate a target object line image; calculating the line length information in the target object line image; and determining the remaining quantity of the object accommodated in the to-be-detected container according to the line length information in the target object line image.

## Description

This application claims priority to Chinese Patent Application No. 202310259442.7 filed with the China National Intellectual Property Administration (CNIPA) on Mar. 16, 2023, the disclosure of which is incorporated herein by reference in its entirety.

### TECHNICAL FIELD

Embodiments of the present application relate to the field of artificial intelligence technology, for example, a method and an apparatus for detecting a remaining quantity of an object accommodated in a container, an electronic device, and a storage medium.

### BACKGROUND

To prevent the occurrence of empty containers due to untimely filling of the objects accommodated in the containers during a loss process, it is often necessary to patrol and inspect manually.

In a process of implementing the present application, the applicant finds that the manual detection of the remaining quantity of an object accommodated in a container in the related art wastes a lot of manpower and material resources. Moreover, the detection accuracy and efficiency are also low.

### SUMMARY

Embodiments of the present application provide a method and an apparatus for detecting a remaining quantity of an object accommodated in a container, an electronic device, and a storage medium to improve the accuracy of detecting the remaining quantity of the object accommodated in the container.

According to an aspect of the present application, a method for detecting a remaining quantity of an object accommodated in a container is provided. The method includes the steps below.

The to-be-detected container image of a to-be-detected container is acquired.

The line information in the to-be-detected container image is calculated to generate a target object line image.

The line length information in the target object line image is calculated.

The remaining quantity of an object accommodated in the to-be-detected container is determined according to the line length information in the target object line image.

According to another aspect of the present application, an apparatus for detecting a remaining quantity of an object accommodated in a container is provided. The apparatus includes a to-be-detected container image acquisition module, a target object line image generation module, a line length information calculation module, and an object remaining quantity determination module.

The to-be-detected container image acquisition module is configured to acquire the to-be-detected container image of the to-be-detected container.

The target object line image generation module is configured to calculate the line information in the to-be-detected container image to generate the target object line image.

The line length information calculation module is configured to calculate the line length information in the target object line image.

The object remaining quantity determination module is configured to determine the remaining quantity of the object accommodated in the to-be-detected container according to the line length information in the target object line image.

According to another aspect of the present disclosure, an electronic device is provided. The electronic device includes at least one processor and a memory.

The memory is communicatively connected to the at least one processor.

The memory stores a computer program executable by the at least one processor to enable the at least one processor to execute the method for detecting a remaining quantity of an object accommodated in a container according to any embodiment of the present application.

According to another aspect of the present application, a computer-readable storage medium is provided. The computer-readable storage medium stores computer instructions. When the computer instructions are executed by a processor, the processor is enabled to perform the method for detecting a remaining quantity of an object accommodated in a container according to any embodiment of the present application.

### BRIEF DESCRIPTION OF DRAWINGS

FIG. 1 is a flowchart of a method for detecting a remaining quantity of an object accommodated in a container according to embodiment one of the present application.
FIG. 2 is a flowchart of another method for a detecting remaining quantity of an object accommodated in a container according to embodiment two of the present application.
FIG. 3 is a view of a to-be-detected container image according to embodiment two of the present application.
FIG. 4 is a diagram of a global object line image according to embodiment two of the present application.
FIG. 5 is a diagram of a grayscale image according to embodiment two of the present application.
FIG. 6 is a diagram of a region mask image according to embodiment two of the present application.
FIG. 7 is a diagram of a local object line image according to embodiment two of the present application.
FIG. 8 is a view of another to-be-detected container image according to embodiment two of the present application.
FIG. 9 is a diagram of another global object line image according to embodiment two of the present application.
FIG. 10 is a diagram of another grayscale image according to embodiment two of the present application.
FIG. 11 is a diagram of a region mask image according to embodiment two of the present application.
FIG. 12 is a diagram of another local object line image according to embodiment two of the present application.
FIG. 13 is a diagram of an apparatus for detecting a remaining quantity of an object accommodated in a container according to embodiment three of the present application.
FIG. 14 is a diagram illustrating the structure of an electronic device according to embodiment four of the present application.

### DETAILED DESCRIPTION

It is to be noted that the terms "first", "second" and the like in the description, claims, and drawings of the present application are used to distinguish between similar objects and are not necessarily used to describe a particular order or sequence. It should be understood that the data used in this way is interchangeable where appropriate so that the embodiments of the present application described herein can also be implemented in a sequence not illustrated or described herein. In addition, the terms "include", "have" and any other variations thereof are intended to encompass a non-exclusive inclusion. For example, a process, method, system, product, or equipment that includes a series of steps or units not only includes the expressly listed steps or units but may also include other steps or units that are not expressly listed or are inherent to such process, method, product or equipment.

### Embodiment one

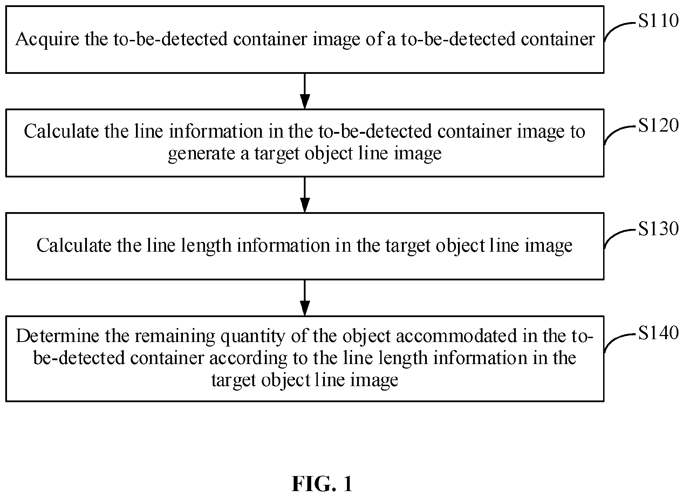

FIG. 1 is a flowchart of a method for detecting a remaining quantity of an object accommodated in a container according to embodiment one of the present application. This embodiment of the present application may be applicable to the case where the remaining quantity of the residue of the object accommodated in the container is detected. The method may be performed by an apparatus for detecting a remaining quantity of an object accommodated in the container. The apparatus may be implemented in at least one of software and hardware and may generally be integrated in an electronic device. The electronic device may be a terminal device or may be a server device. Accordingly, as shown in FIG. 1, the method includes the operations below.

In S 110, the to-be-detected container image of a to-be-detected container is acquired.

The to-be-detected container may be a tool used to hold articles and objects. The to-be-detected container may be made of different materials with different shapes to satisfy different requirements. The to-be-detected container image may be an image obtained by photographing the to-be-detected container using a photographing device.

In this embodiment of the present application, the photographing device may be mounted on the to-be-detected container, and the photographing device may be used to perform image acquisition on the to-be-detected container to obtain the to-be-detected container image. The photographing device may be a fixed camera. The to-be-detected container may include a food plate and a cat litter box, and the to-be-detected container may be any container of different materials and shapes to satisfy different requirements. The object accommodated in the to-be-detected container may include food in the food plate or cat litter in the cat sand box, and the object accommodated in the to-be-detected container may be any type of objects held in the container. Types of the to-be-detected container and the object accommodated in the to-be-detected container are not limited in this embodiment of the present application.

In S120, the line information in the to-be-detected container image is calculated to generate a target object line image.

The line information may be information used to reflect the remaining quantity of the object accommodated in the to-be-detected container. The target obj ect line image may be image data composed of all lines of the to-be-detected container image.

In an embodiment of the present application, an edge detection algorithm is used to calculate the to-be-detected container image to obtain the line information in the to-be-detected container image and obtain the target object line image according to the line information in the to-be-detected container image. Optionally, the edge detection algorithm is the differential edge detection algorithm or the differential edge detection algorithm. The type of edge detection algorithm used to calculate the line information in the to-be-detected container image is not limited in this embodiment of the present application.

In S130, the line length information in the target object line image is calculated.

The line length information may be indicator information used to indicate the remaining quantity of the object accommodated in a container.

In this embodiment of the present application, in an implementation of this embodiment, all line information in the to-be-detected container image may be summed to obtain the line length information in the target object line image; in another implementation of this embodiment, all line information in the to-be-detected container image may be weighted and summed to obtain the line length information in the target object line image. The method used to determine the line length information in the target object line image is not limited in this embodiment of the present application.

In S 140, the remaining quantity of the object accommodated in the to-be-detected container is determined according to the line length information in the target object line image.

In this embodiment of the present application, in an implementation of this embodiment, a threshold is customized for the line length information in the target object line image calculated in the preceding steps, and the remaining quantity of the object accommodated in the to-be-detected container is determined according to the size of the threshold; in another implementation of this embodiment, the line length information in the target object line image calculated in the preceding steps is equally divided, and a threshold is set, the remaining quantity of the object accommodated in the to-be-detected container is determined according to the size of the threshold.

In the technical solutions of this embodiment of the present application, the to-be-detected container image of the to-be-detected container is acquired, and the line information in the to-be-detected container image is calculated to generate the target object line image. Then, the line length information in the target object line image is calculated according to the target object line image. The remaining quantity of the object accommodated in the to-be-detected container is determined according to the line length information in the target object line image. The remaining quantity of the object accommodated in the container is accurately detected, and the accuracy of detecting the remaining quantity of the object accommodated in the container is improved.

### Embodiment two

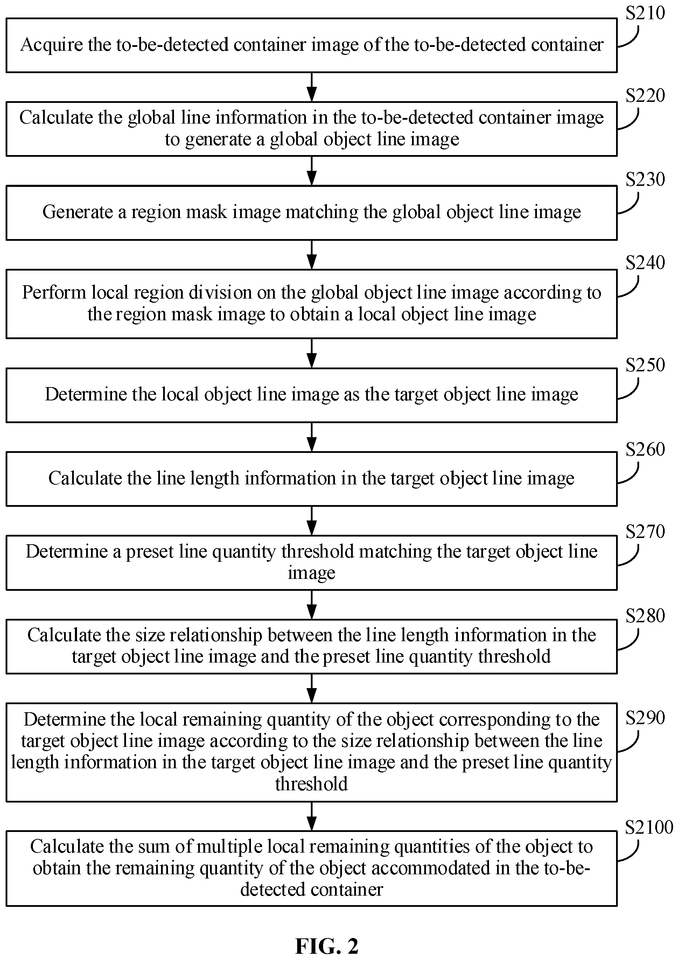

FIG. 2 is a flowchart of another method for detecting a remaining quantity of an object accommodated in a container according to embodiment two of the present application. This embodiment is designed based on the preceding embodiment. In this embodiment, multiple optional implementations for determining the remaining quantity of the object accommodated in the to-be-detected container are provided. Accordingly, as shown in FIG. 2, the method in this embodiment may include the steps below.

In S210, the to-be-detected container image of the to-be-detected container is acquired.

In S220, the global line information in the to-be-detected container image is calculated to generate a global object line image.

The global line information may be information used to indicate a to-be-detected container global feature. The global object line image may be an image composed of the global line information in the to-be-detected container image.

In this embodiment of the present application, the photographing device is mounted on the to-be-detected container, and the photographing device is used to perform image acquisition on the to-be-detected container to obtain the to-be-detected container image. Then an edge detection algorithm is used to perform edge detection processing on the to-be-detected container image to obtain the global line information in the to-be-detected container image and generate the global object line image.

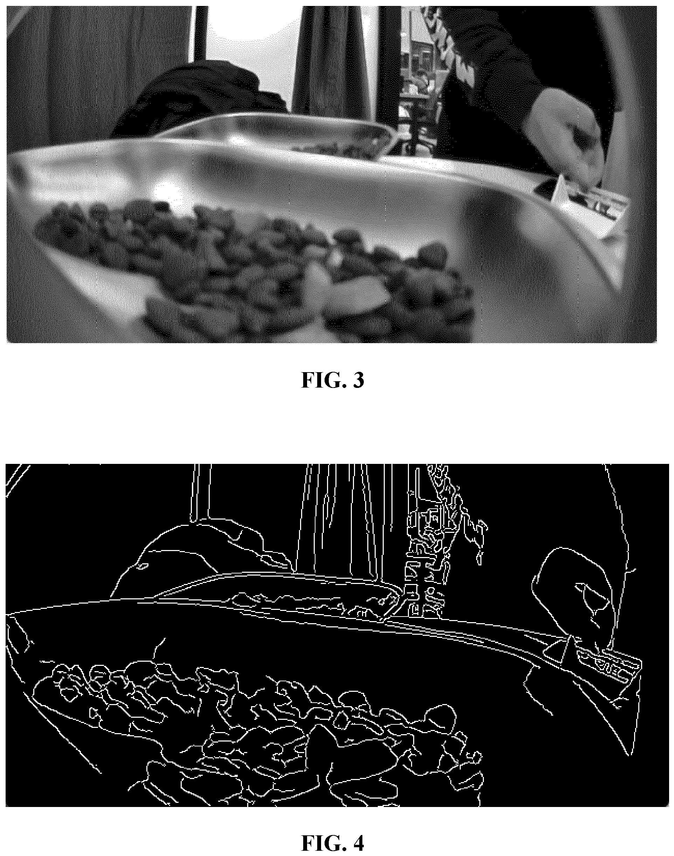

In an example, description is given by using an example in which the to-be-detected container is a food plate. FIG. 3 is a view of a to-be-detected container image according to embodiment two of the present application. As shown in FIG. 3, a fixed camera may be mounted on the food plate, and the fixed camera may be used to acquire the image of the food plate to obtain a to-be-detected container image. FIG. 4 is a diagram of a global object line image according to embodiment two of the present application. As shown in FIG. 4, an edge detection algorithm is used to perform edge detection processing on the to-be-detected container image to obtain the global line information in the to-be-detected container image and generate the global object line image. In this embodiment of the present application, the edge detection algorithm is not limited. Any method for performing edge detection processing on an image can be used as the edge detection algorithm of this embodiment of the present application.

In S230, a region mask image matching the global object line image is generated.

In this embodiment of the present application, the region mask image matching the global object line image may be generated in the following manners: the global grayscale image matching the global object line image is generated; and the global grayscale image is divided into a set number of region mask images according to the region grayscale values of the global grayscale image.

The global grayscale image is a grayscale image including region grayscale values of multiple different regions in the global grayscale image. The region mask image is an image obtained through region division according to the region grayscale values of the regions in the global grayscale image.

In this embodiment of the present application, the global grayscale image is obtained by matching according to the global object line image obtained in the preceding steps. The global grayscale image is divided to obtain the region mask image according to the region grayscale values corresponding to different regions in the global grayscale image. In an implementation of this embodiment, the region grayscale values of multiple regions in the region mask image may be different. The number of regions in the region mask image may be customized according to user requirements. In this embodiment of the present application, the number of regions in the region mask image is not limited.

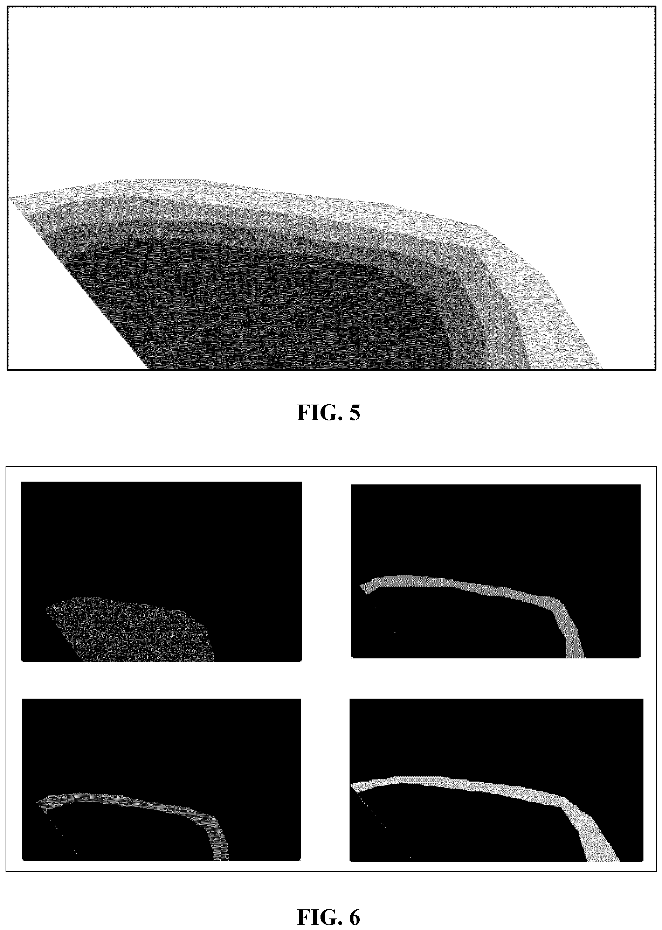

In an example, description continues to be given by using an example in which the to-be-detected container is a food plate. FIG. 5 is a diagram of a grayscale image according to embodiment two of the present application. As shown in FIG. 5, the global grayscale image matching the global object line image of the food plate is obtained according to the preceding steps. The global grayscale image matching the global object line image of the food plate includes four different regions. Different regions correspond to four different region grayscale values.

FIG. 6 is a diagram of a region mask image according to embodiment two of the present application. As shown in FIG. 6, the global grayscale image is divided to obtain the region mask image of the food plate according to the region grayscale values corresponding to different regions in the global grayscale image. The global grayscale image matching the global object line image of the food plate includes four different grayscale values. Thus, the global grayscale image of the food plate may be divided to obtain four region mask images of the food plate.

In S240, local region division is performed on the global object line image according to the region mask image to obtain a local object line image.

In S250, the local object line image is determined as the target object line image.

The local object line image may be an image obtained by dividing the global object line image using the grayscale value of the region mask image.

In this embodiment of the present application, the region mask images of different regions are used to divide the global object line image of the to-be-detected object into local regions, and a local object line image corresponding to a region where a region mask image is located is obtained. The local object line image is used as the target object line image. The number of target object line images is consistent with the number of region mask images.

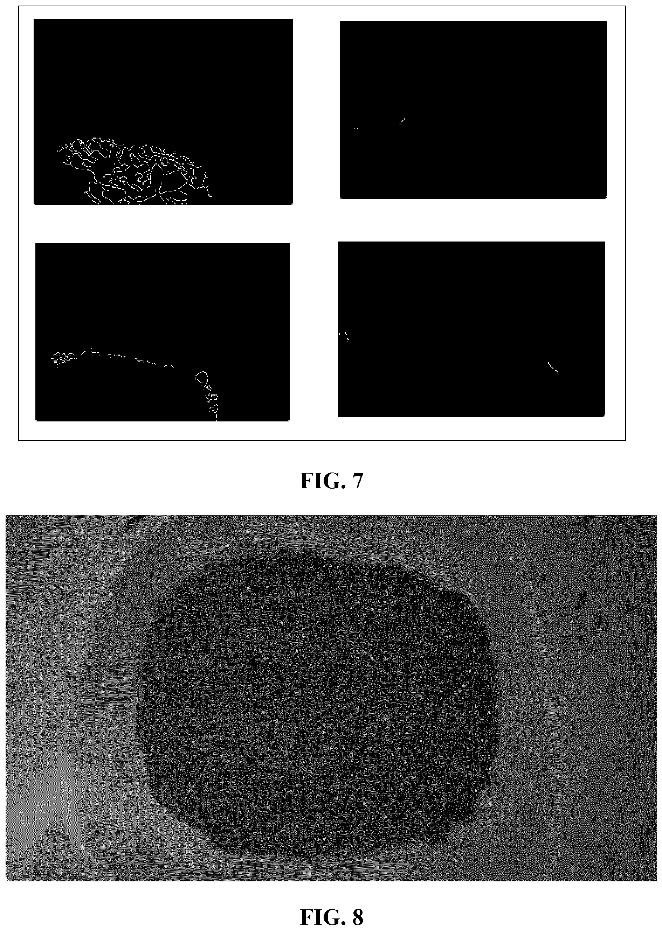

In an example, description continues to be given by using an example in which the to-be-detected container is a food plate. FIG. 7 is a diagram of a local object line image according to embodiment two of the present application. As shown in FIG. 7, multiple region mask images are obtained according to the preceding steps. The region mask images of different regions are used to divide the global object line image of the food plate into at least one local region, and the local object line image corresponding to one region where the region mask image is located is obtained. The local object line image is used as the target object line image. The number of local object line images of the food plate is consistent with the number of region mask images of the food plate. For example, four local object line images of the food plate corresponding to the four region mask images of the food plate may be generated.

In S260, the line length information in the target object line image is calculated.

In this embodiment of the present application, the local object line image is used as the target object line image. The length information of all lines in the target object line image is counted.

In an example, description continues to be given by using an example in which the to-be-detected container is a food plate. From the preceding steps, multiple local object line images of the food plate are obtained. The local object line image of the food plate is used as the target object line images of the food plate. Moreover, the line length information of each target object line image in the target object line images is counted and calculated.

In S270, the preset line quantity threshold matching the target object line image is determined.

In S280, the size relationship between the line length information in the target object line image and the preset line quantity threshold is calculated.

In S290, the local remaining quantity of the object corresponding to the target object line image is determined according to the size relationship between the line length information in the target object line image and the preset line quantity threshold.

In an example, multiple target object line images exist. The preset line quantity threshold includes a first line quantity threshold and a second line quantity threshold. The local remaining quantity of the object corresponding to the target object line image may be determined in the following manners according to the size relationship between the line length information in the target object line images and the preset line quantity threshold: In the case where one total line length in a target object line image is less than or equal to the first line quantity threshold, it is determined that the local remaining quantity of the object corresponding to the one total line length is a first set remaining quantity; in the case where one total line length in a target object line image is greater than or equal to the second line quantity threshold, it is determined that the local remaining quantity of the object corresponding to the one total line length is a second set remaining quantity; and in the case where one total line length in the target object line image is greater than the first line quantity threshold and less than the second line quantity threshold, the line proportion relationship between the total line length in the one target object line image and the second line quantity threshold is calculated, and the value of the local remaining quantity of the object corresponding to the one target object line image is determined according to the line proportion relationship.

The first line quantity threshold may be a reference indicator used to indicate that the object in the container is insufficient and needs to be supplied into the container. The second line quantity threshold may be a reference indicator used to indicate that the obj ect in the container is sufficient and does not need to be supplied into the container. The first line quantity threshold and the second line quantity threshold may be customized according to different target object line images. In an implementation of the embodiment, the first set remaining quantity of the object is a fixed percentage value for indicating the percentage of the object accommodated in the to-be-detected container in the empty plate status. The second set remaining quantity of the object is a fixed percentage value for indicating the percentage of the object accommodated in the to-be-detected container in the full plate status.

In an example, description continues to be given by using an example in which the to-be-detected container is a food plate. It is assumed that it is determined that the first line quantity threshold in the target object line image of the food plate may be 100, the second line quantity threshold may be 1000, the first set remaining quantity of the object may be 0%, and the second set remaining quantity of the object may be 100%. Then, when the total line length in the target object line image is counted as 80, the remaining quantity of the local object may be determined as 0%. When the total line length in the target object line image is counted as 5000, the remaining quantity of the local object may be determined as 100%. When the line in the target object line image is counted as 500, the total line length in the target object line image is greater than the first line quantity threshold and less than the second line quantity threshold, and the line proportion relationship between the total line length in the target object line image and the second line quantity threshold is calculated to obtain the value of the remaining quantity of the local object. After calculation, the value of the remaining quantity of the local object may be 50%.

In S2100, the sum of multiple local remaining quantities of the object is calculated to obtain the remaining quantity of the object of the to-be-detected container.

In an example, the sum of multiple local remaining quantities of the object may be counted to obtain the remaining quantity of the object of the to-be-detected container in the following manners: the local proportion weights matching the multiple target object line images are determined; the product of each local remaining quantity of the object matching a corresponding target object line image in the multiple target object line images and a corresponding the local proportion weight of the multiple local proportion weights is calculated to obtain the multiple target local remaining quantities of the object matching the multiple target object line images; and the sum of the multiple target local remaining quantities of the object is calculated to obtain the remaining quantity of the object of the to-be-detected container.

In this embodiment of the present application, the local proportion weights matching the target object line images may be customized according to actual requirements. The product of a local remaining quantity of the object matching a corresponding target object line image in the multiple target object line images and a corresponding local proportion weight of the multiple local proportion weights is calculated to obtain a target local remaining quantity of the object matching the corresponding target object line image in the multiple target object line images. Multiple target local remaining quantities of the object corresponding to the multiple target object line images are summed to obtain the remaining quantity of the object accommodated in the to-be-detected container.

In an example, description continues to be given by using an example in which the to-be-detected container is a food plate. The local proportion weights matching the target object line images of the food plate may be customized according to actual requirements. The proportion weight of the local region A matching the target object line image of the food plate is 0.3. The proportion weight of the local region B matching the target object line image of the food plate is 0.25. The proportion weight of the local region C matching the target object line image of the food plate is 0.25. The proportion weight of the local region D matching the target object line image of the food plate is 0.2. The values of the local remaining quantities of the object obtained in the preceding steps may be 100%, 86%, 0, and 0 respectively. For example, the product of a local remaining quantity of the object matching a corresponding target object line image of the multiple target object line images obtained according to the preceding steps and a corresponding local proportion weight of the multiple local proportion weights is calculated to obtain a target local remaining quantity of the object matching the corresponding target object line image of the multiple target object line images. Multiple target local remaining quantities of the object corresponding to the multiple target object line images are summed to obtain the remaining quantity of the object of the to-be-detected container. In this example, that is, 100% and 0.3 are multiplied, 86% and 0.25 are multiplied, 0 and 0.25 are multiplied, and 0 and 0.25 are multiplied. In this manner, the remaining quantity of the object accommodated in the food plate is obtained and is 51.5%.

In this embodiment of the present application, the to-be-detected container may also be a cat litter box. FIG. 8 is a view of another to-be-detected container image according to embodiment two of the present application. As shown in FIG. 8, a fixed camera may be mounted on the cat litter box, and the fixed camera may be used to acquire the image of the cat litter box to obtain a to-be-detected container image.

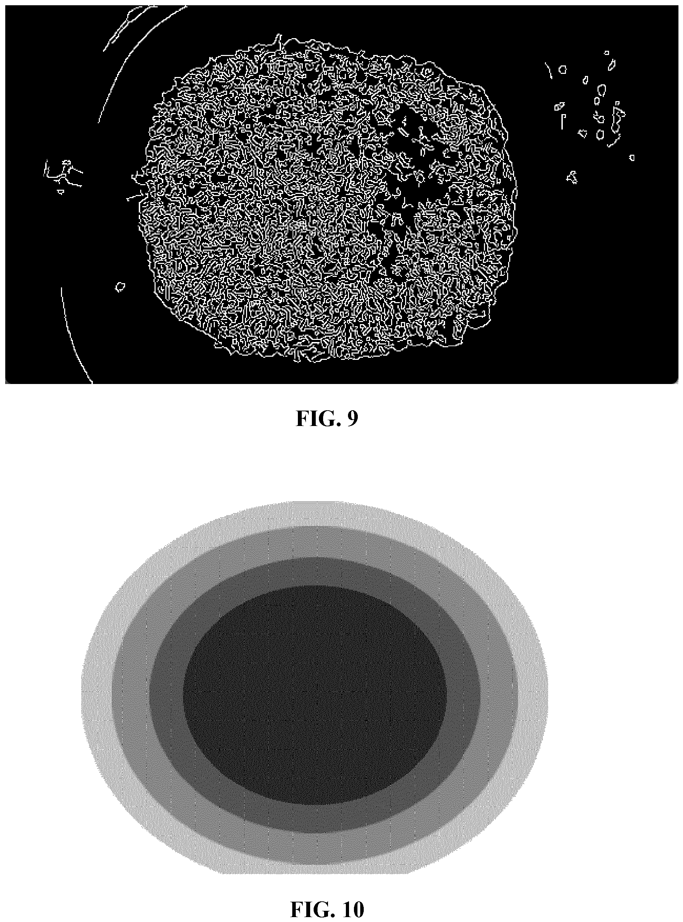

FIG. 9 is a diagram of another global object line image according to embodiment two of the present application. As shown in FIG. 9, an edge detection algorithm is used to perform edge detection processing on the to-be-detected container image to obtain the global line information in the to-be-detected container image and generate the global object line image.

FIG. 10 is a diagram of another grayscale image according to embodiment two of the present application. As shown in FIG. 10, the global grayscale image matching the global object line image of the cat litter box is obtained according to the preceding steps. The global grayscale image matching the global object line image of the cat litter box includes four different regions. Different regions correspond to four different region grayscale values.

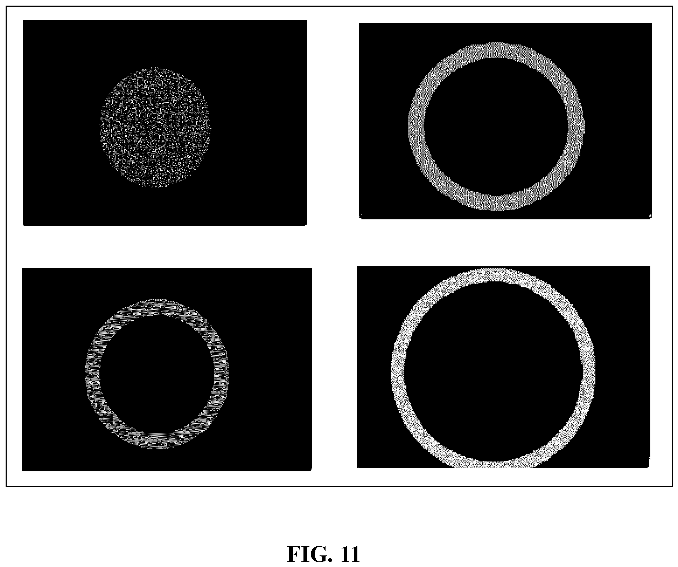

FIG. 11 is a diagram of a region mask image according to embodiment two of the present application. As shown in FIG. 11, the global grayscale image is divided to obtain at least one region mask image of the cat litter box according to the region grayscale values corresponding to different regions in the global grayscale image. The global grayscale image matching the global object line image of the cat litter box includes four different grayscale values. Thus, the global grayscale image of the cat litter box may be divided to obtain four region mask images of the cat litter box.

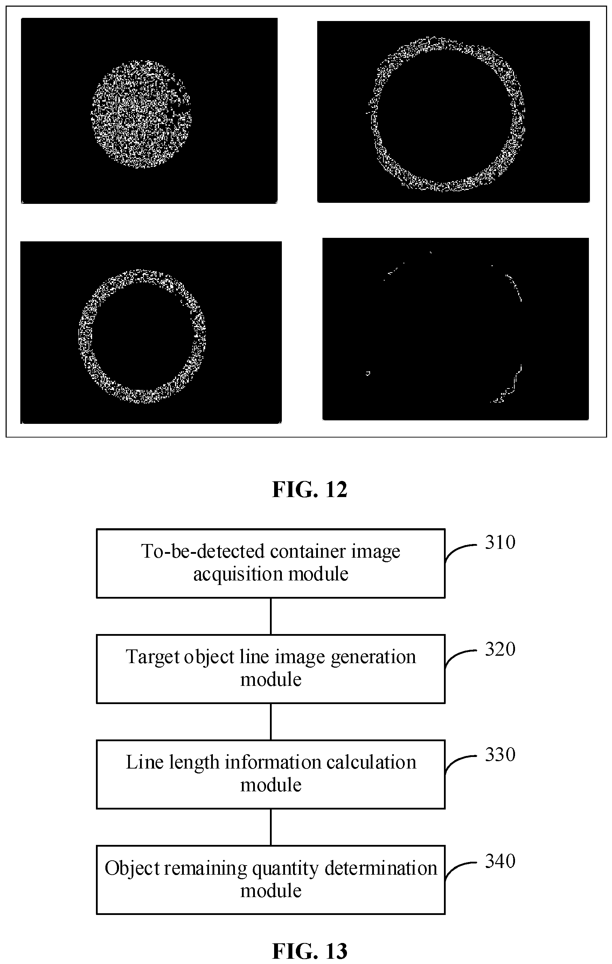

FIG. 12 is a diagram of another local object line image according to embodiment two of the present application. As shown in FIG. 12, multiple region mask images are obtained according to the preceding steps. The region mask images of different regions are used to divide the global object line image of the cat litter box into local regions, and the local object line image corresponding to the region where the region mask image is located is obtained. The local object line image is used as the target object line image. The number of local object line images of the cat litter box is consistent with the number of region mask images of the cat litter box. For example, four local object line images of the cat litter box corresponding to the region mask images of the cat litter box may be generated. Based on the preceding steps, multiple local object line images of the cat litter box are obtained. The multiple local object line images of the cat litter box are used as the target object line images of the cat litter box. Moreover, the line length information of multiple target object line images is counted and calculated.

For example, it is assumed that it is determined that the first line quantity threshold in the target object line image of the cat litter box may be 100, the second line quantity threshold may be 1000, the first set remaining quantity of the object may be 0%, and the second set remaining quantity of the object may be 100%. Then, if the total line length in the target object line image is counted as 80, the remaining quantity of the local object may be determined as 0%. If the total line length in the target object line image is counted as 5000, the remaining quantity of the local object may be determined as 100%. If the line in the target object line image is counted as 500, the total line length in the target object line image is greater than the first line quantity threshold and less than the second line quantity threshold, the line proportion relationship between the total line length in the target object line image and the second line quantity threshold is calculated to obtain the value of the remaining quantity of the local object. After calculation, the value of the remaining quantity of the local object may be 50%.

The local proportion weights matching the target object line images of the cat litter box may be customized according to actual requirements. The proportion weight of the local region A matching the target object line image of the cat litter box is 0.3. The proportion weight of the local region B matching the target object line image of the cat litter box is 0.25. The proportion weight of the local region C matching the target object line image of the cat litter box is 0.25. The proportion weight of the local region D matching the target object line image of the cat litter box is 0.2. The values of the local remaining quantities of the object obtained in the preceding steps may be 100%, 100%, 85%, and 0 respectively. For example, the product of each local remaining quantity of the object matching a corresponding target object line image of the multiple target object line images obtained according to the preceding steps and a corresponding local proportion weight of the local proportion weights is calculated to obtain multiple target local remaining quantities of the object matching the multiple target object line images. Multiple target local remaining quantities of the object are summed to obtain the remaining quantity of the object accommodated in the to-be-detected container. In this example, that is, 100% and 0.3 are multiplied, 100% and 0.25 are multiplied, 86% and 0.25 are multiplied, and 0 and 0.25 are multiplied. In this manner, the remaining quantity of the object of the cat litter box is obtained and is 76%.

In the technical solutions of this embodiment of the present application, the to-be-detected container image of the to-be-detected container is acquired. The global line information in the to-be-detected container image is calculated. The global object line image and the region mask image are generated. Local region division is performed on the global object line image according to the region mask image to obtain the local object line image. Then, the local object line image is used as the target object line image. The line length information in the target object line image is calculated. The preset line quantity threshold matching the target object line image is determined. The size relationship between the line length information in the target object line image and the preset line quantity threshold is calculated. The local remaining quantity of the object corresponding to the target object line image is determined according to the size relationship between the line length information in the target object line image and the preset line quantity threshold. The sum of multiple local remaining quantities of the object is counted to obtain the remaining quantity of the object of the to-be-detected container. The preset line quantity threshold is set to calculate the remaining quantity of the object. The remaining quantity of the object accommodated in the container is accurately detected, and the accuracy of detecting the remaining quantity of the object accommodated in the container is improved.

### Embodiment three

FIG. 13 is a diagram of an apparatus for detecting a remaining quantity of an object according to embodiment three of the present application. As shown in FIG. 13, the apparatus includes a to-be-detected container image acquisition module 310, a target object line image generation module 320, a line length information calculation module 330, and an object remaining quantity determination module 340.

The to-be-detected container image acquisition module 310 is configured to acquire the to-be-detected container image of the to-be-detected container.

The target object line image generation module 320 is configured to calculate the line information in the to-be-detected container image to generate the target object line image.

The line length information calculation module 330 is configured to calculate the line length information in the target object line image.

The object remaining quantity determination module 340 is configured to determine the remaining quantity of the object of the to-be-detected container according to the line length information in the target object line image.

In the technical solutions of this embodiment of the present application, the to-be-detected container image of the to-be-detected container is acquired, and the line information in the to-be-detected container image is calculated to generate the target object line image. The line length information in the target object line image is calculated according to the target object line image. The remaining quantity of the object of the to-be-detected container is determined according to the line length information in the target object line image. The remaining quantity of the object accommodated in the container is accurately detected, and the accuracy of detecting the remaining quantity of the object accommodated in the container is improved.

Optionally, the target object line image generation module 320 is configured to calculate the global line information in the to-be-detected container image to generate the global object line image; generate the region mask image matching the global object line image; perform local region division on the global object line image according to the region mask image to obtain the local object line image; and determine the local object line image as the target object line image.

Optionally, the target object line image generation module 320 is also configured to generate the global grayscale image matching the global object line image and divide the global grayscale image into a set number of region mask images according to a region grayscale value of the global grayscale image.

Optionally, the object remaining quantity determination module 340 is configured to: determine the preset line quantity threshold matching the target object line image; calculate the size relationship between the line length information in the target object line image and the preset line quantity threshold; and determine the remaining quantity accommodated in the object of the to-be-detected container according to the size relationship between the line length information in the target object line image and the preset line quantity threshold.

Optionally, multiple target object line images exist. The object remaining quantity determination module 340 is configured to determine multiple local remaining quantities of the object corresponding to the target object line images according to the size relationship between the line length information in the target object line images and the preset line quantity threshold; and calculate the sum of the multiple local remaining quantities of the object to obtain the remaining quantity of the object of the to-be-detected container.

Optionally, the preset line quantity threshold includes a first line quantity threshold and a second line quantity threshold. The object remaining quantity determination module 340 is configured to, in the case where the total line length in the target object line image is less than or equal to the first line quantity threshold, determine that the local remaining quantity of the object is a first set remaining quantity; in a case where the total line length in the target object line image is greater than or equal to the second line quantity threshold, determine that the local remaining quantity of the object is a second set remaining quantity; and in the case where the total line length in the target object line image is greater than the first line quantity threshold and less than the second line quantity threshold, calculate the line proportion relationship between total line length in the target object line image and the second line quantity threshold and determine the value of the local remaining quantity of the object according to the line proportion relationship.

Optionally, the object remaining quantity determination module 340 is configured to determine the local proportion weights matching the multiple target object line images; calculate a product of each of the multiple local remaining quantities of the object matching a corresponding target object line image of multiple target object line images and a corresponding local proportion weight of the local proportion weights to obtain the multiple target local remaining quantities of the object matching the multiple target object line images; and count the sum of multiple target local remaining quantities of the object to obtain the remaining quantity of the object of the to-be-detected container.

The preceding apparatus for detecting remaining quantity of an object can perform the method for detecting remaining quantity of an object provided by the embodiments of the present application and has functional modules and effects corresponding to the method executed. For technical details not described in detail in this embodiment, reference may be made to the method for detecting a remaining quantity of an object according to any embodiment of the present application.

### Embodiment four

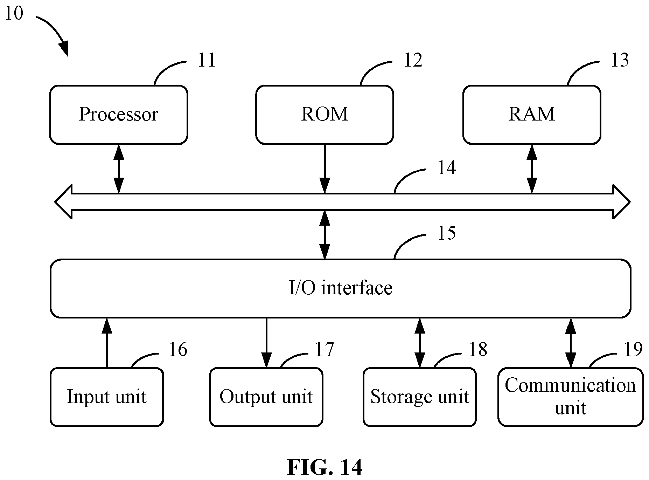

FIG. 14 shows a diagram illustrating the structure of an electronic device 10 that may be used for implementing the embodiments of the present application. The electronic device is intended to represent various forms of digital computers, for example, a laptop computer, a desktop computer, a workbench, a personal digital assistant, a server, a blade server, a mainframe computer, or another applicable computer. The electronic device may also represent various forms of mobile apparatuses, for example, a personal digital assistant, a cellphone, a smartphone, a wearable device (such as helmets, glasses, watches), or a similar computing apparatus. Herein the shown components, the connections and relationships between these components, and the functions of these components are illustrative only and are not intended to limit the implementation of the present application as described or claimed herein.

As shown in FIG. 14, the electronic device 10 includes at least one processor 11 and a memory communicatively connected to the at least one processor 11, such as a read-only memory (ROM) 12 and a random access memory (RAM) 13. The memory stores a computer program that may be executed by the at least one processor. The processor 11 may perform various appropriate actions and processing according to a computer program stored in a read-only memory (ROM) 12 or a computer program loaded into a random-access memory (RAM) 13 from a storage unit 18. Various programs and data required for operations of the electronic device 10 may also be stored in the RAM 13. The processor 11, the ROM 12, and the RAM 14 are connected to each other through a bus 14. An input/output (I/O) interface 15 is also connected to the bus 14.

Multiple components in the electronic device 10 are connected to the I/O interface 15. The multiple components include an input unit 16 such as a keyboard or a mouse, an output unit 17 such as various types of displays or speakers, the storage unit 18 such as a magnetic disk or an optical disk, and a communication unit 19 such as a network card, a modem or a wireless communication transceiver. The communication unit 19 allows the electronic device 10 to exchange information or data with other devices over a computer network such as the Internet and/or various telecommunications networks.

The processor 11 may be various general-purpose and/or special-purpose processing components having processing and computing capabilities. Examples of the processor 11 include, but are not limited to, central processing units (CPUs), graphics processing units (GPUs), various dedicated artificial intelligence (AI) computing chips, various processors running machine learning models and algorithms, digital signal processors (DSPs) and any suitable processors, controllers, and microcontrollers. The processor 501 performs various methods and processing described above, such as the method for detecting remaining quantity of an object accommodated in a container.

In some embodiments, the method for detecting a remaining quantity of an object accommodated in a container may be implemented as a computer program tangibly included in a computer-readable storage medium such as the storage unit 18. In some embodiments, part or all of computer programs may be loaded and/or installed onto the electronic device 10 via at least one of the ROM 12 and/or the communication unit 19. When the computer programs are loaded into the RAM 13 and executed by the processor 11, at least one step of the preceding method for detecting a remaining quantity of an object accommodated in a container may be performed. Alternatively, in other embodiments, the processor 11 may be configured, in any other appropriate manner (for example, by means of firmware), to perform the method for detecting remaining quantity of an object accommodated in a container.

The various embodiments of the systems and techniques described herein may be implemented in digital electronic circuitry, integrated circuitry, a field-programmable gate array (FPGA), an application-specific integrated circuit (ASIC), application specific standard parts (ASSP), a system on a chip (SoC), a complex programmable logic device (CPLD), computer hardware, firmware, software and/or a combination thereof. The various embodiments may include implementations in at least one computer program. The at least one computer program may be executable and/or interpretable on a programmable system including at least one programmable processor. The programmable processor may be a special-purpose or general-purpose programmable processor for receiving data and instructions from a memory system, at least one input apparatus and at least one output apparatus and transmitting the data and instructions to the memory system, the at least one input apparatus, and the at least one output apparatus.

The computer program for implementation of the method of the present application may be written in any combination of at least one programming language. The computer program may be provided for the processor of a general-purpose computer, a special-purpose computer, or another programmable data processing apparatus to enable functions/operations specified in flowcharts and/or block diagrams to be implemented when the computer program are executed by the processor. The computer program may be executed entirely on a machine, partly on a machine, as a stand-alone software package, partly on a machine and partly on a remote machine, or entirely on a remote machine or a server.

In the context of the present application, a computer-readable storage medium may be a tangible medium that may contain or store a program that is used by or in conjunction with a system, apparatus or device that executes instructions. The computer-readable storage medium may include, but is not limited to, an electronic, magnetic, optical, electromagnetic, infrared or semiconductor system, apparatus or device, or any suitable combination thereof. Alternatively, the computer-readable storage medium may be a machine readable signal medium. Examples of the machine-readable storage medium may include an electrical connection based on at least one wire, a portable computer disk, a hard disk, a random-access memory (RAM), a read-only memory (ROM), an erasable programmable read-only memory (EPROM), a flash memory, an optical fiber, a portable compact disk read-only memory (CD-ROM), an optical memory device, a magnetic memory device or any suitable combination thereof.

In order that interaction with a user is provided, the systems and techniques described herein may be implemented on an electronic device. The electronic device has a display apparatus for displaying information to the user, such as a cathode-ray tube (CRT) or a liquid-crystal display (LCD) monitor, and a keyboard and a pointing apparatus such as a mouse or a trackball through which the user can provide input to the electronic device. Other types of apparatuses may also be used for providing interaction with a user. For example, feedback provided for the user may be sensory feedback in any form (for example, visual feedback, auditory feedback, or haptic feedback). Moreover, input from the user may be received in any form (including acoustic input, voice input, or haptic input).

The systems and techniques described herein may be implemented in a computing system including a back-end component (for example, a data server), a computing system including a middleware component (for example, an application server), a computing system including a front-end component (for example, a client computer having a graphical user interface or a web browser through which a user can interact with implementations of the systems and techniques described herein), or a computing system including any combination of such back-end, middleware or front-end components. Components of a system may be interconnected by any form or medium of digital data communication (for example, a communication network). Examples of the communication network include a local area network (LAN), a wide area network (WAN), a blockchain network, and the Internet.

A computing system may include a client and a server. The client and the server are usually far away from each other and generally interact through the communication network. The relationship between the client and the server arises by virtue of computer programs running on respective computers and having a client-server relationship to each other. The server may be a cloud server, also referred to as a cloud computing server or a cloud host. As a host product in a cloud computing service system, the server solves the defects of difficult management and weak service scalability in conventional physical host and virtual private server (VPS) services.

## Claims

1. A method for detecting remaining quantity of an object accommodated in a container, comprising:
acquiring a to-be-detected container image of a to-be-detected container;
calculating line information in the to-be-detected container image to generate a target object line image;
calculating line length information in the target object line image; and
determining a remaining quantity of the object accommodated in the to-be-detected container according to line length information in the target object line image.

2. The method according to claim 1, wherein calculating the line information in the to-be-detected container image to generate the target object line image comprises:
calculating global line information in the to-be-detected container image to generate a global object line image;
generating a region mask image matching the global object line image;
performing local region division on the global object line image according to the region mask image to obtain a local object line image; and
determining the local object line image as the target object line image.

3. The method according to claim 2, wherein generating the region mask image matching the global object line image comprises:
generating a global grayscale image matching the global object line image;
dividing the global grayscale image into a set number of region mask images according to a region grayscale value of the global grayscale image.

4. The method according to claim 1, wherein determining the remaining quantity of the object accommodated in the to-be-detected container according to the line length information in the target object line image comprises:
determining a preset line quantity threshold matching the target object line image;
calculating a size relationship between the line length information in the target object line image and the preset line quantity threshold; and
determining the remaining quantity of the object accommodated in the to-be-detected container according to the size relationship between the line length information in the target object line image and the preset line quantity threshold.

5. The method according to claim 4, wherein the target object line image comprises a plurality of target object line images; and
determining the remaining quantity of the object accommodated in the to-be-detected container according to the size relationship between the line length information in the target object line image and the preset line quantity threshold comprises:
determining a plurality of local remaining quantities of the object corresponding to the plurality of target object line images according to the size relationship between the line length information in the plurality of target object line images and the preset line quantity threshold; and
calculating a sum of the plurality of local remaining quantities of the object to obtain the remaining quantity of the object accommodated in the to-be-detected container.

6. The method according to claim 5, wherein the preset line quantity threshold comprises a first line quantity threshold and a second line quantity threshold; and
determining the plurality of local remaining quantities of the object corresponding to the plurality of target object line images according to the size relationship between the line length information in the plurality of target object line images and the preset line quantity threshold comprises:
in response to a total line length in one target object line image of the plurality of target object line images being less than or equal to the first line quantity threshold, determining that a local remaining quantity of the object corresponding to the one target object line image is a first set remaining quantity;
in response to the total line length in the one target object line image of the plurality of target object line images being greater than or equal to the second line quantity threshold, determining that the local remaining quantity of the object corresponding to the one target object line image is a second set remaining quantity; and
in response to the total line length in the one target object line image of the plurality of target object line images being greater than the first line quantity threshold and less than the second line quantity threshold, calculating a line proportion relationship between the total line length in the one target object line image and the second line quantity threshold, and determining the local remaining quantity of the object corresponding to the one target object line image according to the line proportion relationship.

7. The method according to claim 5, wherein calculating the sum of the plurality of local remaining quantities of the object to obtain the remaining quantity of the object accommodated in the to-be-detected container comprises:
determining a plurality of local proportion weights matching the plurality of target object line images;
calculating a product of each of the plurality of local remaining quantities of the object matching a corresponding target object line image of the plurality of target object line images and a corresponding local proportion weight of the plurality of local proportion weights to obtain the plurality target local remaining quantities of the object matching the plurality of target object line images; and
calculating the sum of the plurality of target local remaining quantities of the object to obtain the remaining quantity of the object accommodated in the to-be-detected container.

8. An apparatus for detecting remaining quantity of an object accommodated in a container, comprising:
a to-be-detected container image acquisition module configured to acquire a to-be-detected container image of a to-be-detected container;
a target object line image generation module configured to calculate line information in the to-be-detected container image to generate a target object line image;
a line length information calculation module configured to calculate line length information in the target object line image; and
an object remaining quantity determination module configured to determine a remaining quantity of the object accommodated in the to-be-detected container according to the line length information in the target object line image.

9. An electronic device, comprising:
at least one processor; and
a memory communicatively connected to the at least one processor,
wherein the memory stores a computer program executable by the at least one processor to enable the at least one processor to execute the method for detecting a remaining quantity of an object accommodated in a container according to any one of claims 1 to 7.

10. A computer-readable storage medium, storing computer instructions, wherein when the computer instructions are executed by a processor, the processor is enabled to perform the method for detecting a remaining quantity of an object accommodated in a container according to any one of claims 1 to 7.
